# EUROPÄISCHE PATENTANMELDUNG

(11) **EP 3 808 644 A1**
(43) Veröffentlichungstag der Anmeldung: **21.04.2021**
(21) Anmeldenummer: 20000376.2
(22) Anmeldetag: 15.10.2020
(51) Int. Cl.: B62M 6/55, B62M 11/00, F16H 57/033, H02K 7/116

(54) **ANTRIEBSEINHEIT UND ANTRIEBSSTRANG**

(30) Priorität: 15.10.2019 DE 102019007149
(71) Anmelder: Muck, Siegfried, 87437 Kempten (DE)
(72) Erfinder: Muck, Siegfried, 87437 Kempten (DE)
(74) Vertreter: Castell, Klaus

(57) **Zusammenfassung**

Zusammenfassend betrifft die Erfindung einen Antriebseinheit nach dem Patent EP 15 001 545 A1, das dadurch gekennzeichnet ist, dass für eine geschwindigkeitsregelnde Antriebsform das Sonnenrad V24 mit der Pedalachse V23 fest verbunden ist und damit eine summierende Abtriebsdrehzahl am Kettenblatt erzeugt, wobei für eine drehmomentunterstützende Antriebsform das Sonnenrad P24 keine feste Verbindung zur Pedalachse P23 hat, dafür am Getriebegehäuse fixiert wird, damit die Eigenschaft eines Differenzials und somit einer summierenden Abtriebsdrehzahl verliert, jedoch damit die Eigenschaft der drehmomentunterstützenden Antriebsform erhält.

## Beschreibung

Die Erfindung betrifft eine Antriebseinheit und einen Antriebsstrang gemäß der EP 2 946 959 A1.

Die Anforderungen an eine Motorunterstützung bei E-Bikes sind sehr unterschiedlich. Für City-Bikes und Trekking-Bikes stehen der Komfort und die einfache Bedienung im Vordergrund. In der Mountainbike-Anwendung ist eine maximale Drehmoment-Unterstützung bei niedriger Geschwindigkeit am Berg das den Kauf entscheidende Argument.

Der Erfindung liegt daher die Aufgabe zu Grunde, mit einfachen Anpassungen eines Antriebes beiden Anforderungen gerecht zu werden.

Die Lösung der Aufgabe wird mit den Merkmalen des Patentanspruchs 1 verwirklicht.

Vorteilhafte Ausführungsformen sind Gegenstand der Unteransprüche.

Die Erfindung beschreibt einen Antriebsstrang nach dem Patent EP 15 001 545.1 A1 der dadurch gekennzeichnet ist, dass für eine geschwindigkeitsregelnde Antriebsform das Sonnenrad mit der Pedalachse fest verbunden ist und damit eine summierende Abtriebsdrehzahl am Kettenblatt erzeugt, wobei für eine drehmomentunterstützende Antriebsform das Sonnenrad keine feste Verbindung zur Pedalachse hat, dafür am Getriebegehäuse fixiert wird, damit die Eigenschaft eines Differenzials und somit einer summierenden Abtriebsdrehzahl verliert, jedoch damit die Eigenschaft der drehmomentunterstützenden Antriebsform erhält.

Vorteilhaft ist es, wenn die Getriebeausführung in Zähneanzahl, Modul und Profilverschiebung für die geschwindigkeitsregelnde sowie für die drehmomentunterstützende Antriebsart identisch sind.

Ausführungsbeispiele sind in den Figuren1 bis 4 dargestellt und werden im Folgenden näher beschrieben.

Es zeigt
- Figur 1: ein Schnittbild einer Antriebseinheit, zu einer Hälfte mit den Bauteilen V1, V2, V3, und einer zweiten Hälfte mit den Bauteilen P1, P2, P3,
- Figur 2: eine Antriebseinheit mit einem Eingangssonnenrad (24), fest verbunden mit der Pedalachse (23) gemäß EP 2 946 959 A1 Fig. 5,
- Figur 3: ein Schnittbild einer Antriebseinheit mit der Kraftflusslinie P bei Verwendung der Bauteile P1; P2; P3 und
- Figur 4: ein Schnittbild einer Antriebseinheit mit der Kraftflusslinie V bei der Verwendung der Bauteile V1; V2; V3.

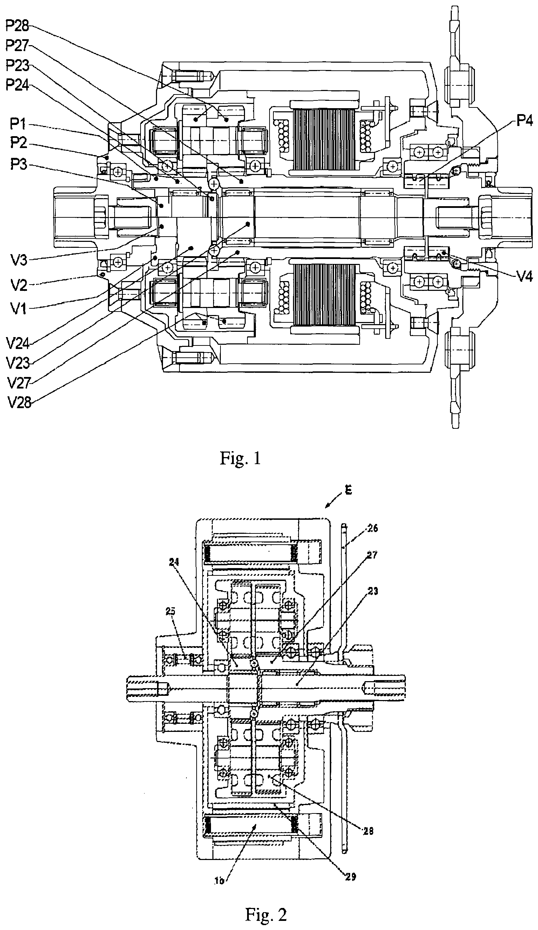

Die in Figur 1 gezeigte Antriebseinheit ist ein Schnitt durch ein Getriebe. Die Figur 1 zeigt in der unteren Hälfte ein aus der Figur 5 der EP 2 946 959 A1 bekanntes, in Figur 2 dargestelltes Getriebe und in der oberen Hälfte die erfindungsgemäße Antriebseinheit. Die in der Figur 1 gezeigte untere Hälfte des Getriebes mit den Bauteilen V1, V2 und V3 entspricht in der Funktion der in der Figur 2 gezeigten Ausführung gemäß der FIG. 5 der EP 2 946 959 A1.

Wenn die bekannten, in der unteren Hälfte der Figur 1 gezeigten Bauteile V1, V2 und V3 durch die neuen in der oberen Hälfte der Figur gezeigten Bauteile P1, P2 und P3 ersetzt werden, entfällt die Funktion eines Differenzials und ein solcher Antrieb erhält damit die Eigenschaften bekannter motorunterstützender Antriebe. Derartige Antriebe sind aus Veröffentlichungen von BOSCH, BROSE, Shimano usw. bekannt.

In der bekannten, in der unteren Hälfte der Figur 1 gezeigten Ausführungsform der Antriebsart V und in der neuen in der oberen Hälfte der Figur 1 gezeigten Ausführungsform der Antriebsart P ist der umlaufende Planetenradträger mit den umlaufenden Planetenzahnrädern identisch.

Bei der in der unteren Hälfte der Figur 1 gezeigten Ausführungsform der Antriebsart V ist das Eingangssonnenrad V24 vergleichsweise wie in der FIG. 5 der EP 2 946 959 A1 fest mit der Pedalachse V23 verbunden und bildet somit ein Differenzial.

In der neuen, in der oberen Hälfte der Figur 1 gezeigten Ausführungsform der Antriebsart P wird das Zahnrad P24 (Eingangssonnenrad) gemäß Figur 2 nicht mit der Pedalachse P23 gemäß Figur 2 verbunden, sondern auf der Pedalachse P23 gemäß P1 drehbar gelagert und mit einem Verbindungsteil P2 mit dem äußeren Gehäuse der Antriebseinheit fest verbunden. Dadurch wird das Motordrehmoment vollständig von der Pedalachse P23 entkoppelt und ausschließlich über eine Rücklaufsperre/Freilauf P4 an das Kettenblatt übertragen.

Demzufolge ist für diese Antriebsart P eine mehrstufige Kettenschaltung bzw. Nabenschaltung erforderlich. Damit können das Unterstützungsdrehmoment und die Fahrgeschwindigkeit entsprechend der Kettenblatt-Konfiguration (z.B. 11-fach Kassette) gewählt werden (gängigste Antriebsart).

Der in der Figur 1 gezeigte Aufbau erlaubt es somit, bei der gleichen Antriebseinheit durch den Austausch nur weniger Bauteile entweder die in der EP 2 946 959 B1 beschriebene Funktion oder eine Funktion mit Schaltgetriebe zu realisieren.

Die Besonderheit dieses Planetengetriebes basiert auf der Differenz der Anzahl der Zähne des Sonnenrades 24 und des Sonnenrades 27. Das Doppelplanetenrad 28 mit zwei identischen Zähnezahlen wälzt sich auf den beiden Sonnenrädern ab und erzeugt bei einer vollständigen Umdrehung eine Differenzbewegung, nämlich um die Differenz der Zähnezahl beider Sonnenräder zueinander.

Beispiel: Sonnenrad 24 mit einer Zähnezahl 20 und Sonnenrad 27 mit einer Zähnezahl 19, wobei beide Planetenräder eine Zähnezahl 20 aufweisen.

Sollten die beiden Sonnenräder 24 und 27 die gleiche Zähnezahl aufweisen, so würde sich die Abtriebsdrehzahl nicht verändern.

Bei still stehender Kurbelachse und einer Umdrehung des Planetenradträgers wälzt sich das Planetenrad, welches mit dem Sonnenrad 24 kämmt, genau eine Umdrehung = 20 Zähne ab. Auch das zweite Planetenrad mit 20 Zähnen, welches mit dem Sonnenrad 27 kämmt, hat sich dabei um eine Umdrehung = 20 Zähne gedreht. Das Sonnenrad 27 jedoch mit 19 Zähnen hat sich dabei um 20 Zähne weitergedreht und sich somit gegenüber dem Sonnenrad 24 um einen Zahn weitergedreht. Ein exaktes Abwälzen der Planetenräder wird durch Profilverschiebung im Abwälz-Herstellverfahren erreicht. Damit lassen sich also Übersetzungen > 20 auf kleinstem Raum unterbringen.

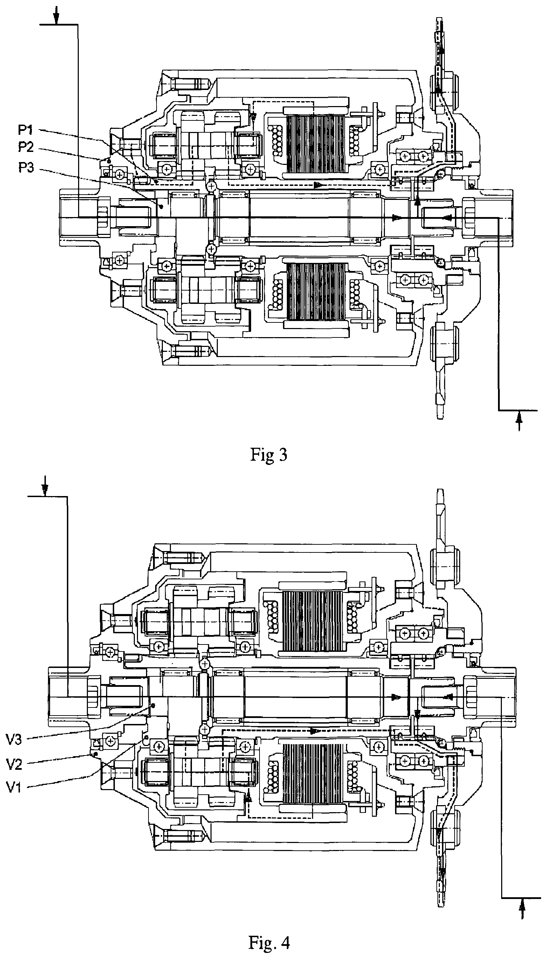

In den Figuren 3 und 4 zeigt die gestrichelte Linie den Kraftfluss P und die durchgezogene Linie den Kraftfluss des Primärantriebs.

## Patentansprüche

1. Antriebssystem mit einer Hybrid-Antriebseinheit, die einen Primärantrieb mit einer Elektromaschine aufweist, wobei in der Elektromaschine ein Getriebemechanismus integriert ist, der
- die Leistung des Primärantriebs über ein Übertragungselement V4 an einen Abtrieb weiterleitet,
- ein Planetenumlaufgetriebe aufweist,
welches ein Eingangssonnenrad, ein Ausgangssonnenrad und mehrere Planetenradsätze aufweist, die in einem Planetenradträger gelagert sind, welcher als Rotor der Elektromaschine ausgebildet ist, wobei durch das Abwälzen auf den beiden Sonnenrädern die Differenzzähnezahl der beiden Sonnenräder die Übersetzung des Planetengetriebes bestimmt,
***dadurch gekennzeichnet, dass***
die Hybrid-Antriebseinheit durch die Veränderung der Befestigung des Eingangssonnenrades, jedoch ohne Veränderung der Verzahnungsgeometrie des Planetengetriebes austauschbar
entweder
durch eine feste Verbindung des Eingangssonnenrades V24 mit der Achse V23 des Primärantriebes als ein Summiergetriebe zur Veränderung der Drehzahl am Ausgangssonnenrad V27 an das Übertragungselement P4
oder
durch eine feste Verbindung des Eingangssonnenrades P23 am Gehäuse der Antriebseinheit als ein Summiergetriebe zur Veränderung des Drehmomentes am Ausgangssonnenrad P27 eingesetzt werden kann.

2. Antriebssystem nach Anspruch 1, ***dadurch gekennzeichnet, dass*** das ÜbertragungselementV4 / P4 einen Freilauf und/oder eine oder mehrere Rücklaufsperren aufweist.

3. Antriebssystem nach einem der vorhergehenden Ansprüche, ***dadurch gekennzeichnet, dass*** der Abtrieb ein antreibendes Kettenblatt oder Zahnriemenrad ist.

4. Antriebssystem nach einem der vorhergehenden Ansprüche, ***dadurch gekennzeichnet, dass*** der Getriebemechanismus als Einheit in Zähneanzahl, Modul und Profilverschiebung bei einer festen Verbindung des Eingangssonnenrades mit der Achse des Primärantriebes und bei einer festen Verbindung des Eingangssonnenrades am Gehäuse der Antriebseinheit identisch ist.
